# EUROPEAN PATENT SPECIFICATION

(11) **EP 0 338 140 B1**
(45) Date of publication and mention of the grant of the patent: **02.02.1994**
(21) Application number: 88303479.5
(22) Date of filing: 18.04.1988
(51) Int. Cl.: F16D 25/04, F16D 25/08

(54) **Dry plate friction clutch**
Kupplung mit trockener Reibung
Embrayage à friction à disque sec

(43) Date of publication of application: 25.10.1989
(73) Proprietor: KONGSBERG AUTOMOTIVE A/S, N-3600 Kongsberg (NO)
(72) Inventor: Svenke, Per Ola, N-3600 Kongsberg (NO)
(74) Representative: Brereton, Paul Arthur

(56) References cited:
- DE-A- 2 158 190
- FR-A- 2 571 106
- US-A- 2 345 860
- US-A- 2 668 610
- US-A- 2 887 202

## Description

The invention relates to a dry plate friction clutch for automobiles, comprising a driven shaft, a clutch plate attached to the driven shaft and positioned between a driving flywheel and a pressure plate rotating with the flywheel, and a hydraulically operated, stationary bellows or membrane actuator arranged centrally with respect to the rotational axis and transmitting axial actuating forces through anti-friction bearings to effect frictional engagement between the clutch plate and the flywheel without transmitting reaction forces to elements outside the clutch.

A bellows actuated clutch in which the reaction forces are taken up internally and thus not transmitted to outside elements, is known from DE 33 25 202 A1. However, this clutch is not suitable for the purpose to which the present invention is to be applied, namely to permit a precise and reliable automatization with good controllability of the clutch function. For such a purpose the following factors are important:
- Positively defined clutch characteristic, i.e. a known relationship between the actuating force or pressure and the torque transmitted. Preferably, the clutch characteristic should be as linear as possible.
- The clutch characteristic should have the least possible hysteresis.
- The clutch characteristic should not depend on wear and temperature.
- Good response, i.e. a small time constant from the moment when full pressure is ordered till the transmitted torque is a maximum. This allows a precise control and a damping effect by controlled spinning (slip).
- The reaction force from the pressure plate should not load the thrust bearing of the engine, which means that forces due to engagement and disengagement of the clutch should be taken up internally in the clutch unit.
- The control should be a pure pressure control, meaning that the clutch characteristic should be independent of the position of the actuator or the pressure plate acting directly on the clutch plate.

FR-A-2571106 describes a dry plate friction clutch for automobiles, comprising a driven shaft, a clutch plate attached to the driven shaft and positioned between a driving flywheel, and a hydraulically operated actuator arranged centrally with respect to the rotational axis and transmitting axial actuating forces to effect frictional engagement between the clutch plate and the flywheel.

The actuator reacts against a fixed stationary element and a further actuator, also reacting against a fixed stationary element, loads the flywheel towards the clutch plate.

US-A-2,688,610 describes a dry plate clutch for automobiles, comprising a driven shaft, a clutch plate attached to the driven shaft and positioned between a driving flywheel and a pressure plate which rotates with the flywheel but is movable axially relatively thereto, and a stationary hydraulically operated bellows or membrane actuator arranged centrally with respect to the rotational axis of the clutch for transmitting axial actuating forces through anti-friction bearings to the pressure plate and the flywheel respectively. Such a clutch according to the invention is characterised in that the actuator when pressurized urges, through the second bearing, the pressure plate towards the clutch plate and the flywheel to effect frictional engagement of the clutch and in that the reaction forces of the actuator are transmitted to the flywheel through the first bearing and through only rotary members of the clutch.

The characteristic curve of such a clutch will be near linear. The response is fast and the control therefore precise. This allows the desired damping effect to be obtained by controlled slip. Since there are no transmission elements involving friction in the transmittal of the movement of the actuator to the clutch plate, the hysteresis will be very small. Further, the clutch is self-adjusting, and the actuating force and transmitted torque are independent of wear (provided the friction coefficient does not change through wear). Variations in temperature will influence the characteristic curve only to a small degree. The design is simple and involves a small number of parts. Most of the parts are standard automobile clutch parts and existing clutches in all popular car makes can be modified to incorporate the invention.

A clutch according to the invention and the properties thereof will be discussed in the following description, reference being had to the drawing.

Fig. 1 shows an axial section through a clutch according to the invention.

Fig. 2 shows the clutch characteristic (characteristic curve), i.e. the relationship between the actuator pressure and the axial force on the clutch plate, in a static test.

Fig. 3 shows the clutch characteristic, i.e. the relationship between the actuator pressure and the torque transferred, in a dynamic test.

Fig. 4 shows the dynamic clutch characteristic when the spacing between the clutch plate and the pressure plate in released (disengaged) state is about 2 mm (simulation of worn clutch).

Fig. 5 shows the dynamic clutch characteristic at three different clutch temperatures.

Fig. 6 shows the actuator pressure as well as the transmitted torque as a function of the time.

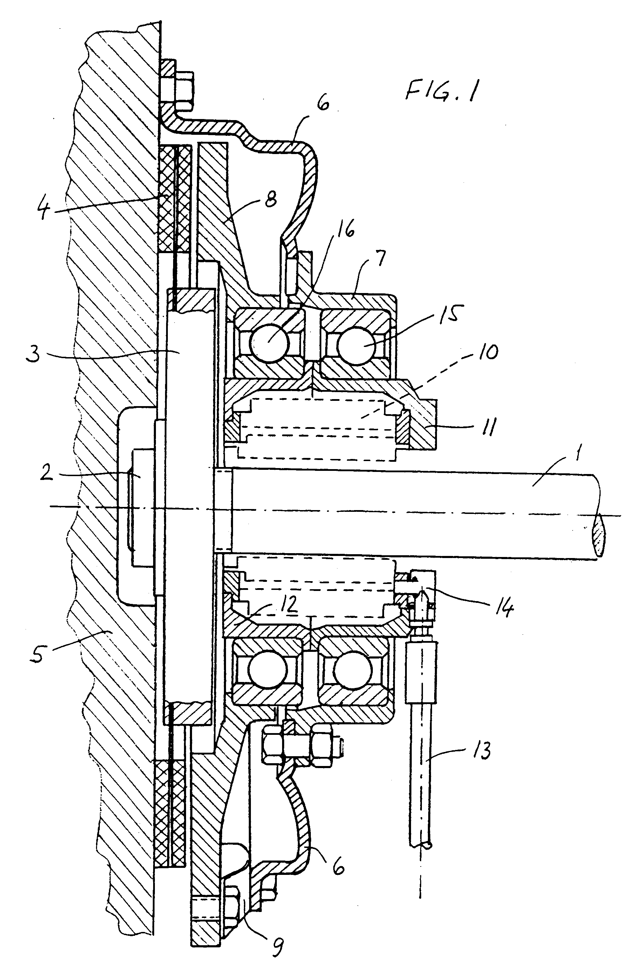

The clutch in Fig. 1 largely consists of elements which are not only conventional but even standard for most mass-produced automobiles. This is true for the driven shaft 1 constituting the input shaft to the gear transmission, for the hub 2 which is mounted on the shaft 1 and has a hub disc 3 and a clutch plate 4, as well as for the flywheel 5 which constitutes the driving part.

The clutch unit further comprises a clutch cover 6 secured to the flywheel 5 and connected to an outer bearing case 7, as well as a pressure plate 8 which is connected to the clutch cover 6 through a coupling 9 which permits the pressure plate 8 to move axially relatively to the cover 6, but provides for rotation of the pressure plate together with the cover. Finally, the clutch comprises a concentric bellows actuator 10 acting between two actuator rings 11, 12 and accordingly allowing these two rings to be moved axially away from each other when hydraulic pressure medium is supplied to the interior of the bellows through a supply conduit 13 and a valve unit 14. Instead of a bellows actuator a membrane actuator may be used.

The actuator ring 11 is mounted on the inner ring of a self-aligning ball bearing 15, the outer ring of which is mounted in the bearing case 7. The other actuator ring 12 is mounted on the inner ring of a self-aligning ball bearing 16, the outer ring of which is connected to the pressure plate 8.

It will be seen that the pressure in the bellows actuator 10 is transmitted to the two actuator rings 11, 12 and through the ball bearings 15, 16, the outer bearing case 7 and the clutch cover 6 to the flywheel 5 and the pressure plate 8, respectively, thereby forcing the clutch plate 4 against the flywheel 5.

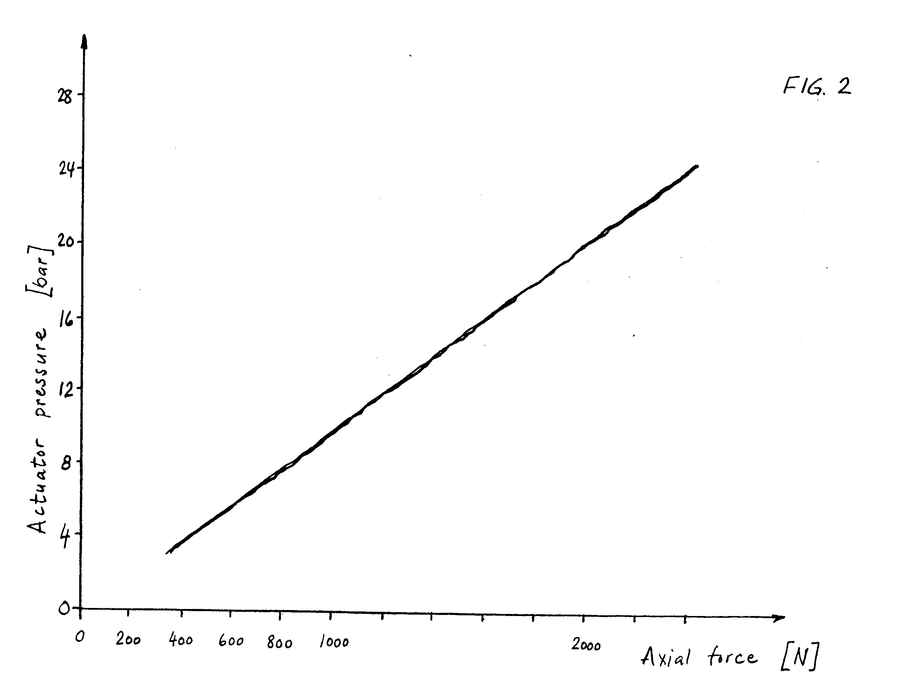

As shown in Fig. 2, the static clutch characteristic is well defined and linear as well as free of hysteresis.

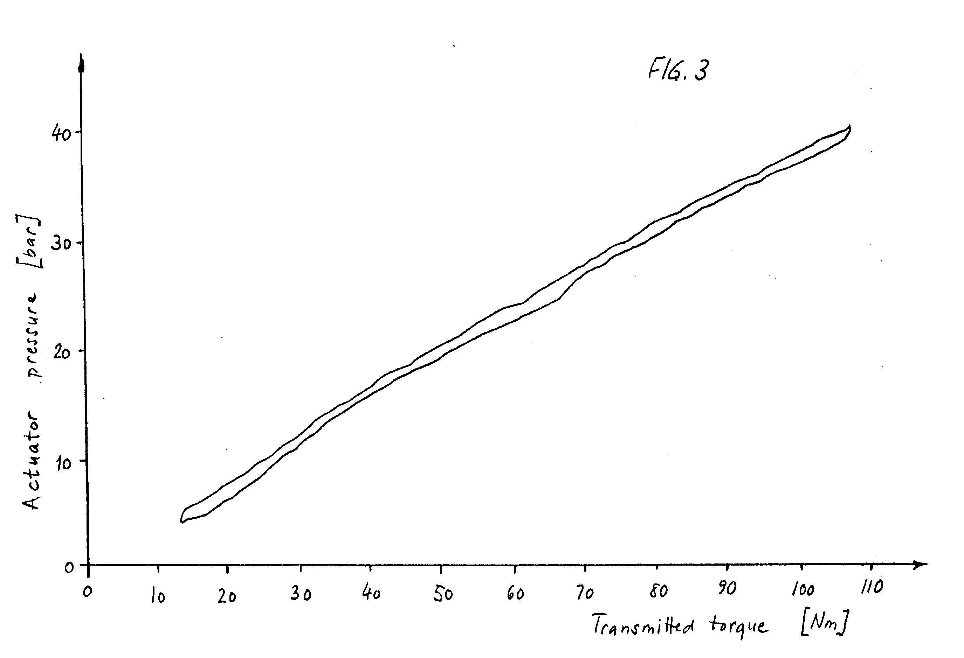

Further, Fig. 3 shows that the dynamic characteristic is typically also approximately linear and has a small hysteresis. The characteristic curve illustrated has been recorded at a speed of about 950 rpm and in cold state of the clutch.

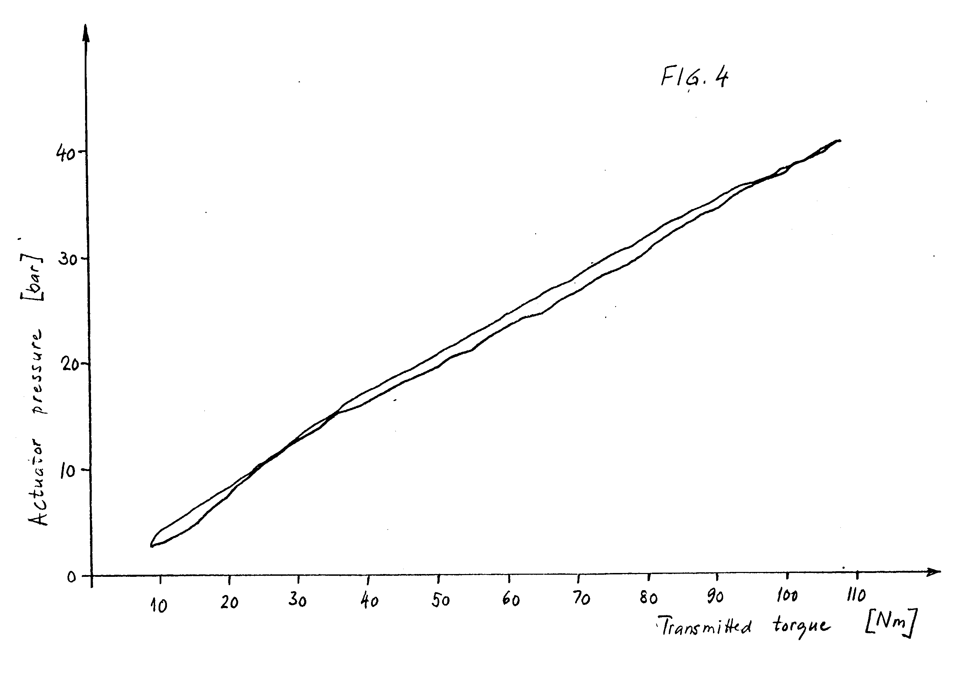

In Fig. 4 the result of a dynamic test with the purpose of establishing whether the characteristic changes upon wear, is shown. The dynamic characteristic in Fig. 4 was obtained by increasing the gap between the pressure plate and the clutch plate from 0,5 mm, which was the value of the gap when the characteristic curve in Fig. 3 was recorded, to 2,0 mm, corresponding to a "worn" clutch. The clutch can be termed "semi-hot". The two characteristics are similar and accordingly demonstrate that the characteristic is influenced by wear to a small degree only.

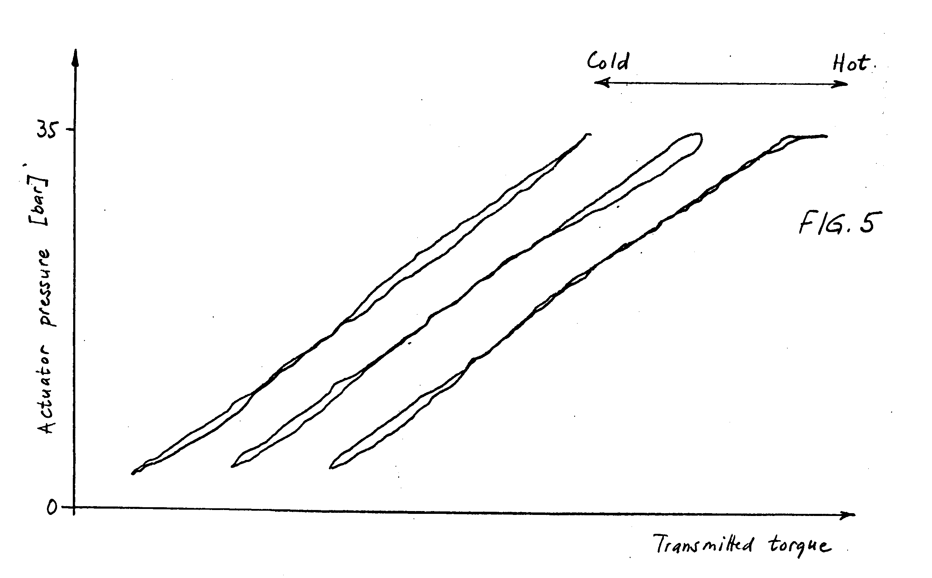

In Fig. 5 the dynamic characteristics at about 950 rpm and three different temperatures (increasing from left to right) are shown. The zero point for transferred torque has been displaced in order to place the curves apart. It is seen that the characteristic is not changed substantially not even by a temperature change.

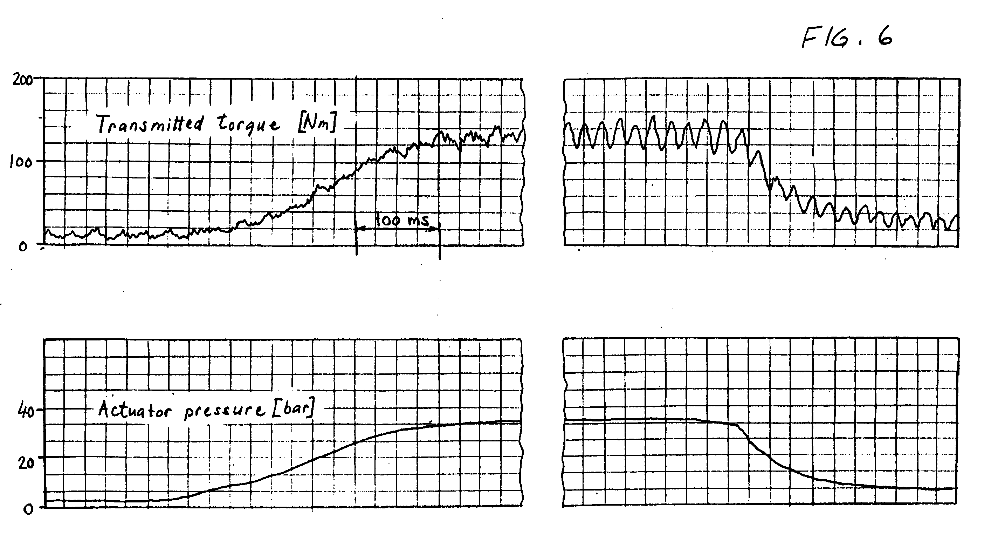

Finally, Fig. 6 illustrates the dynamics (reaction speed) of the clutch. The actuator pressure as well as the transferred torque were recorded on a recorder as a function of the time. Fig. 6 shows an extract of the recordings. The test was carried out by applying and releasing, respectively, a pressure of about 35 bar on the actuator 10 through the valve 14. The engine speed varied from 2000 rpm to 1600 rpm at load. The ratio in the gear transmission was 2.125. A comparison of the clutch torque with the pressure in the actuator shows that the time lag is extremely small. The small lag still present is probably due to the fact that the bellows actuator must be moved somewhat, which requires a certain flow of oil taking a certain time.

The presumably largest advantage of the clutch according to the invention is that it can be controlled very precisely, for instance so as to achieve a relative slip of 50 to 100 rpm, which makes it possible to obtain a compensating damping effect on the power transmission from an internal combustion engine to a gear transmission and further to the driving wheels.

## Claims

1. A dry plate clutch for automobiles, comprising a driven shaft (1), a clutch plate (4) attached to the driven shaft and positioned between a driving flywheel (5) and a pressure plate (8) which rotates with the flywheel (5) but is movable axially relatively thereto, and a stationary hydraulically operated bellows or membrane actuator (10) arranged centrally with respect to the rotational axis of the clutch for transmitting axial actuating forces through anti-friction bearings (15,16) to the pressure plate (8) and the flywheel, characterised in that the actuator (10) when pressurized urges, through a first bearing (16), the pressure plate (8) towards the clutch plate (4) and the flywheel (5) to effect frictional engagement of the clutch and in that the reaction forces of the actuator (10) are transmitted to the flywheel (5) through the other bearing (15) and through only rotary members (6,7) of the clutch.

2. A clutch according to claim 1, characterised in that the actuator extends axially within and between two actuator rings (11,12) supported by the two anti-friction bearings (15,16) .3.

3. A clutch according to claim 2, characterised in that the actuator is supported by the two anti-friction bearings which are in turn supported by the flywheel through a housing (6), (7) secured thereto.

## Patentansprüche

1. Trockenkupplung für Kraftfahrzeuge, die aufweist: eine Abtriebswelle (1), eine Kupplungsscheibe (4), die an der Abtriebswelle angebracht und zwischen einem treibenden Schwungrad (5) und einer Druckplatte (8) positioniert ist, die mit dem Schwungrad (5) gedreht wird, aber relativ dazu in Axialrichtung beweglich ist, und ein ortsfestes hydraulisch betätigbares Balg- oder Membranbetätigungsorgan (10), das mittig in bezug auf die Drehachse der Kupplung angeordnet ist, um axiale Betätigungskräfte über Wälzlager (15, 16) auf die Druckplatte (8) und das Schwungrad zu übertragen, dadurch gekennzeichnet, daß das Betätigungsorgan (10) bei Druckbeaufschlagung die Druckplatte (8) über ein erstes Lager (16) in Richtung zu der Kupplungsscheibe (4) und dem Schwungrad (5) drängt, um ein Reibungseinrücken der Kupplung zu bewirken, und daß die Rückstellkräfte des Betätigungsorgans (10) über das andere Lager (15) und über nur drehbare Elemente (6, 7) der Kupplung auf das Schwungrad (5) übertragen werden.

2. Kupplung nach Anspruch 1, dadurch gekennzeichnet, daß sich das Betätigungsorgan in Axialrichtung innerhalb und zwi-schen zwei Betätigungsorganringen (11, 12) erstreckt, die von den beiden Wälzlagern (15, 16) abgestützt sind.

3. Kupplung nach Anspruch 2, dadurch gekennzeichnet, daß das Betätigungsorgan von den beiden Wälzlagern abgestützt ist, die ihrerseits von dem Schwungrad über ein daran befestigtes Gehäuse (6), (7) abgestützt sind.

## Revendications

1. Embrayage à friction à disque sec pour automobile, comportant un arbre entraîné (1) un disque (4) d'embrayage fixé sur l'arbre entraîné et positionné entre un volant d'entraînement (5) et un disque de pression (8) qui tourne avec le volant (5) mais qui est mobile axialement par rapport à ce dernier, et un actionneur fixe (10) à membrane ou à soufflet commandé de manière hydraulique agencé axialement par rapport à l'axe de rotation de l'embrayage pour transmettre des forces d'actionnement axiales par l'intermédiaire de paliers (15, 16) antifriction vers le disque de pression (8) et le volant, caractérisé en ce que l'actionneur (10), lorsqu'il est sous pression repousse, par l'intermédiaire d'un premier palier (16), le disque de pression (8) vers le disque d'embrayage (4) et le volant (5) pour effectuer la mise en une prise par friction de l'embrayage et en ce que les forces de réaction de l'actionneur (10) sont transmises au volant (5) par l'intermédiaire de l'autre palier (15) et à travers des éléments uniquement rotatifs (6, 7) de l'embrayage.

2. Embrayage selon la revendication 1, caractérisé en ce que l'actionneur s'étend axialement à l'intérieur et entre deux anneaux (11, 12) d'actionneur qui sont supportés par les deux paliers anti-friction (15, 16).

3. Embrayage selon la revendication 2 caractérisée en ce que l'actionneur est supporté par les deux paliers anti-friction qui sont à leur tour supportés par le volant à travers un boîtier (6), (7) fixé sur celui-ci.
